# EUROPEAN PATENT SPECIFICATION

(11) **EP 3 109 515 B1**
(45) Date of publication and mention of the grant of the patent: **20.10.2021**
(21) Application number: 16175378.5
(22) Date of filing: 21.06.2016
(51) Int. Cl.: F16H 61/02

(54) **A METHOD AND APPARATUS FOR PERFORMING SHUTTLE SHIFTING IN A VEHICLE**
VERFAHREN UND VORRICHTUNG ZUR DURCHFÜHRUNG VON UMKEHRSCHALTUNGEN IN EINEM FAHRZEUG
PROCÉDÉ ET APPAREIL PERMETTANT D'EFFECTUER DES INVERSIONS DE MARCHE DANS UN VÉHICULE

(30) Priority: 22.06.2015 IT UB20151580
(43) Date of publication of application: 28.12.2016
(73) Proprietor: CNH Industrial Italia S.p.A., 10135 Torino (IT)
(72) Inventor: GEIRHOFER, Michael, 3361 Aschbach (AT); PIROLA, Carlo Giovanni, 4020 Linz (AT); RINALDI, Matteo, 41043 Formigine (MO) (IT)
(74) Representative: CNH Industrial IP Department

(56) References cited:
- US-A- 5 012 690
- US-A1- 2011 112 733
- None

## Description

The present invention relates to a method and apparatus for performing shuttle shifting in a work vehicle.

Vehicle transmissions for work vehicles, such as agricultural vehicles, earth moving vehicles, off-road vehicles, typically include a plurality of forward and reverse mechanical gears, where each gear has a specific gear ratio for translating engine speed to vehicle speed. Traditionally, the forward and reverse gears are numbered sequentially, where the lower numbered forward and reverse gears have the higher gear ratios and the higher numbered forward and reverse gears have the lower gear ratios.

Additionally, work vehicles often include power shift transmissions equipped with the capability to perform shuttle shifts, where the direction of travel of the work vehicle may be reversed without requiring the operator to change gears or use the clutch. For example, to change the direction of travel from forward to reverse, an operator may be simply required to move a shuttle lever disposed within the operator's cab from a forward position to a reverse position.

Typically, when performing shuttle shifting the gear selected by the transmission control system corresponds to a gear opposite to that originally selected but having a similar gear ratio to the originally selected gear. This ensures that the speed of the work vehicle after the shuttle shift is similar to that prior to the shuttle shifting operation with the only difference being the direction of travel. For example, for a vehicle having four forward gears and four reverse gears, where each of the reverse gears has a similar gear ratio to the corresponding forward gear, if the vehicle is in the first forward gear, when a shuttle shift operation is initiated, the transmission control system will place the vehicle in the first reverse gear. Similarly, if the vehicle is in the second forward gear, when a shuttle shift operation is initiated, the transmission control system will place the vehicle in the second reverse gear. Correspondingly, if the vehicle is in the third or fourth forward gear, when a shuttle shift operation is initiated, the transmission control system will place the vehicle in the third or fourth reverse gear respectively. US 2011/0112733 A1 discloses a vehicle configured to perform shuttle-shifting. A controller is configured to establish a relationship between a last forward gear used and a desired reverse performance.

However, in some transmission systems the gear ratio between corresponding forward and reverse gears is not identical, which can result in the speed of the vehicle changing when a shuffle shift operation is performed, which can be disconcerting for an operator.

In accordance with an aspect of the present invention there is provided a method and apparatus for performing shuttle shifting in a vehicle according to the accompanying claims.

The invention as claimed provides the advantage of allowing an operator to define whether the gear to be used after a shuttle shift operation is to be a faster or slower gear than the one used before the shuttle shift operation.

The present invention will now be described, by way of example, with reference to the accompanying drawings, in which:
Figure 1 illustrates a side view of an embodiment of a work vehicle according to an embodiment of the present invention; and
Figure 2 illustrates a simplified schematic view of an embodiment of transmission suitable for use within the work vehicle illustrated in Figure 1;

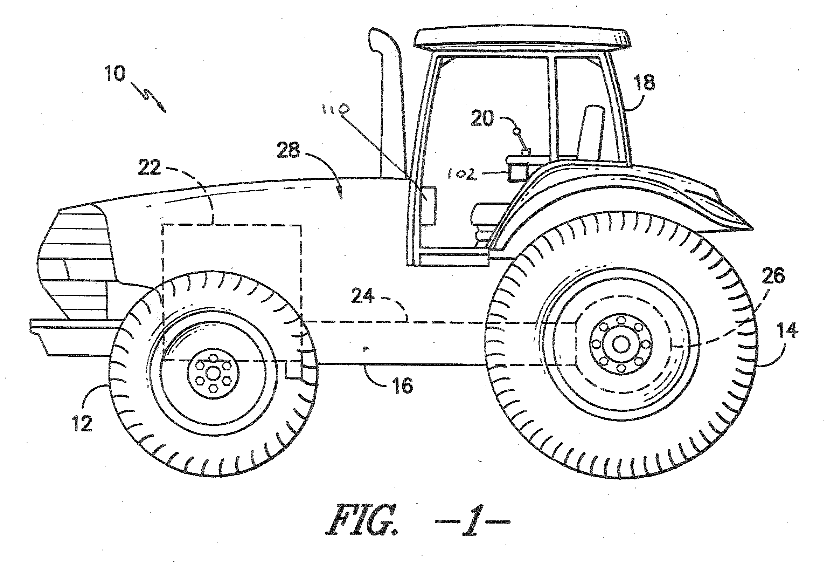

Figure 1 illustrates a side view of one embodiment of a work vehicle 10. As shown, the work vehicle 10 is configured as an agricultural tractor. However, in other embodiments, the work vehicle 10 may be configured as any other suitable work vehicle known in the art, such as various other agricultural vehicles, earth-moving vehicles, loaders and/or various other off-road vehicles.

The work vehicle 10 includes a pair of front wheels 12, a pair or rear wheels 14 and a chassis 16 coupled to and supported by the wheels 12, 14. An operator's cab 18 may be supported by a portion of the chassis 16 and may house various control devices 20 (e.g., levers, pedals, control panels and/or the like) for permitting an operator to control the operation of the work vehicle 10. For instance, one of the control devices 20 may include a shuttle lever configured to allow the operator to shift between forward, and reverse gears as part of a shuttle shift operation and a multi-controller for configuring shuttle shifting operations. Preferably, the operator's cab 18 also includes an electronic display 110, which in conjunction with the multi-controller, allows an operator to configure shuttle shifting settings.

Additionally, the work vehicle 10 may include an engine 22 and a transmission 24 mounted on the chassis 16. The transmission 24 may be operably coupled to the engine 22 and may provide variably adjusted gear ratios for transferring engine power to the wheels 14 via an axle/differential 26. The engine 22, transmission 24, and axle/differential 26 may collectively define a drive train 28 of the work vehicle 10.

It should be appreciated that the transmission 24 may generally comprise any suitable transmission known in the art having a plurality of different gear ratios. For example, the transmission 24 may comprise a multispeed, power shift transmission having a plurality of selectable gear ratios (e.g., a plurality of selectable forward and reverse gear ratios) and a plurality of hydraulically actuated clutches that may be selectively actuated in order to engage the transmission in the differing gear ratios. In such embodiments, the clutches may be configured to be automatically engaged within the transmission 24. For example, an electronic controller 102 may be configured to operate under the control of one or more control devices 20 to transmit suitable control commands or signals to the transmission 24 to instructing it to actuate hydraulic pistons or other suitable actuators configured to engage/disengage the clutches to facilitate a gear change.

It should also be appreciated that the configuration of the work vehicle 10 described above and shown in Figure 1 is provided only to place the present subject matter in an exemplary field of use. Thus, it should be appreciated that the present subject matter may be readily adaptable to any manner of work vehicle configuration 10. For example, in an alternative embodiment, a separate frame or chassis may be provided to which the engine 22, transmission 24, and differential 26 are coupled, a configuration common in smaller tractors. Still other configurations may use an articulated chassis to steer the work vehicle 10, or rely on tracks in lieu of the wheels 12, 14. Additionally, although not shown, the work vehicle 10 may also be configured to be operably coupled to any suitable type of work implement, such as a trailer, spray boom, manure tank, feed grinder, plough and/or the like.

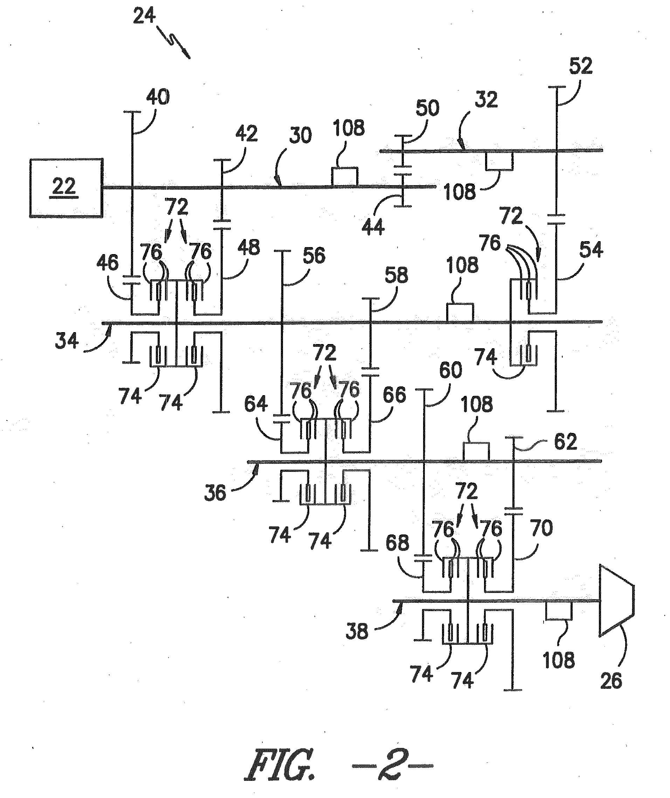

A simplified, schematic diagram of one embodiment of a transmission 24 suitable for use with the work vehicle 10 described above is illustrated in Figure 2. As shown, the transmission 24 includes a plurality of shafts extending parallel to one another. For example, the transmission 24 may include an input shaft 30 operably connected to and driven by the engine 22. The transmission 24 may also include a counter shaft 32 extending parallel to the input shaft 30 for facilitating the reverse gear ratios of the transmission 24. In addition, the transmission 24 may include a plurality of driven shafts 34, 36, 38 extending parallel to the input and counter shafts 30, 32, with the driven/directional shafts 34, 36, 38 forming different levels of direct gear engagements for adjusting the gear ratio of the transmission 24, where the directional shaft 34 forms a first level of direct gear engagement, intermediate shaft 36 forms a second level of direct gear engagement and output shaft 38 forms a third level of direct gear engagements.

The directional shaft 34 may be configured to be driven by the input shaft 30, either directly or indirectly via the counter shaft 32, in order to control the rotational direction of the driven shafts 34, 36, 38 and, thus, the direction of travel of the work vehicle (i.e., forward or reverse). For example, by engaging one of the forward directional gears 46, 48 of the directional shaft 34 such that the input shaft 30 directly drives the directional shaft 34, the transmission 24 may be engaged in a forward gear ratio, thereby resulting in forward motion of the work vehicle 10.

Similarly, by engaging the reverse directional gear 54 of the directional shaft 34 such that the input shaft 30 indirectly drives the directional shaft 34 via the counter shaft 32, the transmission 24 may be engaged in a reverse gear ratio, thereby resulting in reverse motion of the work vehicle 10.

Additionally, the intermediate shaft 36 may be configured to be driven by the directional shaft 34 and the output shaft 38 may be configured to be driven by the intermediate shaft 36. As is generally understood, the output shaft 38 may be coupled to the differential 26 to allow the rotational motion of the output shaft 38 to be transferred to the wheels 14 of the work vehicle 10.

As would be appreciated by a person skilled in the art, the transmission 24 may include any other number of driven shafts forming a corresponding number of direct gear engagement levels. For example, in various embodiments, the transmission 24 may only include two driven shafts forming two levels of direct gear engagements (e.g., by simply including the directional shaft 34 and the output shaft 38) or the transmission 24 may include four or more driven shafts forming four or more levels of direct gear engagements (e.g., by including the directional shaft 34, two or more intermediate shafts 36 and the output shaft 38).

The transmission 24 may also include a plurality of gears installed on the parallel shafts 30, 32, 34, 36, 38. For example, as shown in the illustrated embodiment, the transmission 24 includes eight pairs of gears configured to provide eight forward gear ratios and four reverse ratios, where the transmission 24 includes a first input gear 40, a second input gear 42 and a third input gear 44 mounted to the input shaft 30. The first input gear 40 may drive a first forward gear 46 configured to be selectively engaged with the directional shaft 34. Similarly, the second input gear 42 may drive a second forward gear 48 configured to be selectively engaged with the directional shaft 34. The third input gear 44 may generally be configured to drive the counter shaft 32. For the purpose of the present embodiment, the counter shaft 32 includes a first counter gear 50 and a second counter gear 52, with the first counter gear 50 being driven by the third input gear 44. The second counter gear 52 may, in turn, drive a reverse gear 54 configured to be selectively engaged with the directional shaft 34.

Additionally, the transmission 24 may include first and second drive gears 56, 58 mounted to the directional shaft 34 and third and fourth drive gears 60, 62 mounted to the intermediate shaft 36. The drive gears 56, 58, 60, 62 may generally be adapted to drive corresponding driven gears 64, 66, 68, 70 configured to be selectively engaged with the intermediate and output shafts 36, 38. For example, as shown in the illustrated embodiment, the first drive gear 56 may drive a first driven gear 64 configured to be selectively engaged with the intermediate shaft 36 and the second drive gear 58 may drive a second driven gear 66 configured to be selectively engaged with the intermediate shaft 36. Similarly, the third drive gear 60 may drive a third driven gear 68 configured to be selectively engaged with the output shaft 38 and the fourth drive gear 62 may drive a fourth driven gear 70 configured to be selectively engaged with the output shaft 38.

It should be appreciated that, in alternative embodiments, the transmission 24 may include any other number of gear pairs configured to provide any suitable number of forward and reverse gear ratios. For instance, in some work vehicles, it may be desirable for the transmission 24 to include a larger number of gear pairs, thereby providing a larger number of forward and/or reverse gear ratios (e.g., 24 or more forward ratios), to accommodate complicated loading conditions.

However, within the present embodiment, where the transmission 24 of Fig. 2 includes eight forward gears and four reverse gears, the first reverse gear has a correspondence with the first forward gear, the second reverse gear has a correspondence with the second forward gear, the third reverse gear has a correspondence with the third forward gear, and the fourth reverse gear has a correspondence with the fourth forward gear, where typically a reverse gear has the same gear number as the corresponding forward gear.

Other transmissions 24 may combine the use of four powershift gears, four synchronized gears and two ranges that can be used both in forward and reverse. This way a so called 32x32 transmission 24 is obtained and 32 forward gears correspond to 32 reverse gears. However, shuttle shifting may only be possible between the four forward and four reverse powershift gears of the lowest synchronized gears.

The correspondence between the different forward and reverse gears will typically be based on the gear ratio between the corresponding forward and reverse gears, where the gear ratio of a reverse gear corresponding to a forward gear will typically have the same or similar gear ratio to the corresponding forward gear. Additionally, corresponding forward and reverse gears may also be defined by forward and reverse gear ratios that are closest to each other.

Consequently, when shuttle shifting between a corresponding forward and reverse gear the speed of the work vehicle after the shuttle shifting operation will be similar to that prior to the shuttle shifting operation, with the only difference being the direction of travel.

However, unless the gear ratios between corresponding forward and reverse gears are identical, there will be a slight difference in speed of the work vehicle following a shuttle shift operation, which may be faster or slower depending on the difference in the respective gear ratio between the corresponding forward and reverse gears. In a typical agricultural application the gear ratio of the reverse gear is a little higher than corresponding transmission ratio in forward gear so that vehicle 10 drives a slightly faster when shuttle shifting between a forward gear and the corresponding reverse gear.

To allow the operator of the work vehicle control over whether a work vehicle increases or decreases in speed following a shuttle shifting operation, the present embodiment allows an operator of the work vehicle to configure the vehicles control system, typically via the electronic controller 102, to select a higher or lower gear than the corresponding gear when performing a shuttle shifting operation. This allows an operator of the work vehicle 10 to define a difference between the corresponding forward and reverse gear after a shuttle shifting operation, where the difference between the corresponding gear and the actual selected gear following a shuttle shifting operation is determined by an operator selectable value, which for the purposes of the present embodiment is designated by the term DELTA.

The DELTA value defines the number of gears higher or lower that the selected shuttle shift gear should be relative to the corresponding gear.

For example, if the work vehicle 10 has the second forward gear engaged with the operator having set the DELTA value at +1, following a shuttle shifting operation the selected reverse gear will be the third reverse gear (i.e. the corresponding reverse gear will be the second reverse gear which is increased by one to the third reverse gear as a result of the DELTA value having been set at 1). Preferably, the DELTA value is only applied to the originally selected gear during a shuttle shifting operation when there is a corresponding gear to be selected.

For example, in the present embodiment, where there are eight forward gears and four reverse gears, only the first forward gears have a corresponding reverse gear. As such, the DELTA value is only applied when a shuttle shift operation is performed when the vehicle has any one of the first four forward or reverse gears engaged. In the embodiment where there are an equal number of forward and reverse gears each of the forward gear has a corresponding reverse gear.

A preferred embodiment of the shuttle shifting functionality according to the present invention will now be described, where, following an operator of the work vehicle initiating a shuttle shifting operation via the shuttle lever 20, the electronic controller 102 is configured to implement the shuttle shift operation.

The shuttle shift DELTA value is first stored in the electronic controller 102. To store the DELTA value in the electronic controller 102 the operator of the vehicle 10 uses the multi-controller to enter the electronic controller 102 into a program mode. Once the electronic controller 102 has been placed in the program mode, the operator selects a DELTA value using the multi-controller, where the DELTA value is displayed on the electronic display 110.

The shuttle shift DELTA value may further also be input directly through a multifunctional handle or a touchscreen device 110, operably connected to the electronic controller 102.

For the purposes of the present embodiment, where there is a correspondence between four forward gears and four reverse gears, possible values for DELTA are: - 3, -2, -1, 0, +1, +2, +3.

Following the selection of a shuttle shifting operation, based on the actual gear selected and the pre-programmed DELTA value, the electronic controller 102 determines which gear to select and instructs the power transmission, for example via a CAN message, which gear to engage.

When shuttle shifting from forward to reverse the mathematics of the gear selection is according to the formula: the number of the forward gear + DELTA gives the reverse gear. When shuttle shifting from reverse to forward, the reverse gear - DELTA gives the forward gear.

Depending on the gear selected before shuttle shifting and the DELTA value the electronic controller 102 might not be able to select the required gear. In this situation the closest higher (or lower) gear will be engaged. The DELTA value is temporarily saturated. Important is that for the next shuttle shift there are two different approaches. When shuttle shifting from REV to FWD the DELTA value remains saturated such that shuttle shifting back to FWD results in the same originally selected gear. On the other hand, when shuttle shifting from FWD to REV the original user DELTA will be used. A gear shift when the DELTA is temporarily saturated may trigger the use of the programmed DELTA.

Temporarily saturation of the DELTA value will not result in a change of the DELTA value in the electronic controller 102. Also the display 110 will show the real DELTA, not the saturated DELTA.

A saturated DELTA may occur when the summation of the selected gear and the DELTA would result in a non-existing gear or when it would result in neutral gear.

Only until a gear is selected where shuttle shifting with the programmed DELTA value results in a selectable gear normal operation is resumed.

For the purposes of illustration, for the present embodiment in which there is correspondence between the first four forward powershift gears and the four reverse powershift gears, the transmission gear selection for different DELTA values would be:
A DELTA value of zero would result in the forward and reverse gear being the same following a shuttle shift operation. For example, if the work vehicle is in the first forward gear, following a first shuttle shifting operation the first reverse gear would be selected and following a second shuttle shifting operation the first forward gear would be reselected.

A DELTA value of -1 would result in the selected reverse gear being one step lower than the forward gear and correspondingly the forward gear will be one step higher than the reverse gear.

For example, if the work vehicle is in the third forward gear, following a first shuttle shifting operation the second reverse gear would be selected and following a second shuttle shifting operation the third forward gear would be reselected.

Again, with a DELTA of -1, if the work vehicle is in the first forward gear, following a first shuttle shifting operation the neutral position would have to be selected. But in this occasion the selection of the neutral gear is irrelevant and temporarily a saturated DELTA of zero will be used so that the first reverse gear is selected, instead of neutral. Following a second shuttle shifting operation the temporarily saturated DELTA will be reused such that the again first forward gear is selected.

A DELTA value of +1 would result in the selected reverse gear being one gear higher than the forward gear and correspondingly the forward gear will be one gear lower than the reverse gear.

For example, if the work vehicle is in the second forward gear, following a first shuttle shifting operation the third reverse gear would be selected and following a second shuttle shifting operation the second forward gear would be reselected.

If the work vehicle is in the fourth forward gear, as the fourth gear is the highest available gear for which there is a corresponding reverse gear, following a first shuttle shifting operation the fourth reverse gear is selected. Again a temporarily saturated DELTA of zero will be used to define the correct gear. Again, following a second shuttle shifting operation the fourth forward gear is selected as the temporarily saturated DELTA of zero remains active.

Exceptionally, there is a possibility that the temporarily saturated DELTA is not maintained during a subsequent shuttle shift.

For example, with a DELTA value of +1, a work vehicle in a first forward gear shuttling results in a second reverse gear. The DELTA is not temporarily saturated. When the operator downshifts to the first reverse gear and then shuttle shifts then the DELTA is temporarily saturated to zero and the resulting gear is the first forward gear. Shuttle shifting back to reverse may result in a second reverse gear. In this case the temporarily saturated DELTA is not maintained in the subsequent shuttle shift.

Some configuration may be selected to maintain the temporarily saturated DELTA. Others to maintain the temporarily saturated DELTA only when shuttle shifting from FWD to REV and back to FWD, while the stored DELTA is used when shuttle shifting from REV to FWD and back to REV.

A DELTA value of -3 would result in the selected reverse gear being three gears higher than the forward gear and correspondingly the forward gear will be three gears lower than the reverse gear.

For example, if the work vehicle is in the fourth forward gear, following a first shuttle shifting operation the first reverse gear would be selected and following a second shuttle shifting operation the fourth forward gear would be reselected.

If the work vehicle is in the third forward gear and neutral gear makes no sense , following a first shuttle shifting operation the first reverse gear is selected. The temporarily saturated DELTA value will be 2. However, following a second shuttle shifting operation the third forward gear is selected.

If the work vehicle is in the first forward gear, as there is no reverse gear lower than the first gear, following a first shuttle shifting operation the first reverse gear is selected. The temporarily saturated DELTA value is then 0. Following a second shuttle shifting operation again the first forward gear is selected as the temporarily saturated DELTA remains active.

This method of operator controlled selecting of gears when shuttle shifting is valid when driving forward and shuttle shifting to reverse and back, and also when driving in reverse and shuttle shifting to forward and back.

## Claims

1. A method for performing shuttle shifting in a vehicle (10) having a transmission (24) with a plurality of forward gears and a plurality of corresponding reverse gears, the method comprising receiving a command to perform a shuttle shift operation when a forward gear has been engaged, and in response to receiving the command selecting a higher or lower reverse gear than the reverse gear corresponding to the engaged forward gear based on stored predetermined information; or receiving a command to perform a shuttle shift operation when a reverse gear has been engaged and in response to receiving the command selecting a higher or lower forward gear than the forward gear corresponding to the engaged reverse gear based on stored predetermined information; **characterised in that** when selecting said higher or lower forward or reverse gear results in a non-existing gear or a neutral gear then a temporarily value is used different than the stored predetermined information,
wherein said stored predetermined information determines whether the selected gear is higher or lower than the corresponding reverse gear or corresponding forward gear and said temporarily value is defined to select a gear closest to the gear selection when using said stored predetermined information.

2. A method according to claim 1, wherein the predetermined information determines whether the selected gear is higher or lower than the corresponding reverse gear or corresponding forward gear and how much the selected gear is higher or lower than the corresponding reverse gear or corresponding forward gear.

3. A method according to any one of the preceding claims, wherein the corresponding reverse gear has a gear ratio that is substantially the same as the corresponding forward gear.

4. A method according to claim 1, wherein the temporarily value is also used for the next shuttle shift.

5. A method according to claim 1, wherein the temporarily value is not used for the next shuttle shift, instead the stored predetermined information is used.

6. A controller (102) arranged to perform shuttle shifting in a vehicle (10) having a transmission (24) with a plurality of forward gears and a plurality of corresponding reverse gears, the controller (102) comprising means for receiving a command to perform a shuttle shift operation when a forward gear has been engaged, and in response to receiving the command selecting a higher or lower reverse gear than the reverse gear corresponding to the engaged forward gear based on stored predetermined information; or receiving a command to perform a shuttle shift operation when a reverse gear has been engaged and in response to receiving the command selecting a higher or lower forward gear than the forward gear corresponding to the engaged reverse gear based on stored predetermined information; **characterised in that** when selecting said higher or lower forward or reverse gear results in a non-existing gear or a neutral gear then a temporarily value is used different than the stored predetermined information,
wherein said stored predetermined information determines whether the selected gear is higher or lower than the corresponding reverse gear or corresponding forward gear, and said temporarily value is defined to select a gear closest to the gear selection when using said stored predetermined information.

7. A controller according to claim 6, wherein the predetermined information determines whether the selected gear is higher or lower than the corresponding reverse gear or corresponding forward gear and the number of gears the selected gear is higher or lower than the corresponding reverse gear or corresponding forward gear.

8. A controller according to any one of claims 6 - 7, wherein the corresponding reverse gear has a gear ratio that is substantially the same as the corresponding forward gear.

9. A controller according to any one of claims 6 - 7, wherein the corresponding reverse gear has a gear ratio that is closest to the corresponding forward gear than the other reverse gears.

## Patentansprüche

1. Verfahren zum Durchführen von Wendeschaltungen in einem Fahrzeug (10), das ein Getriebe (24) mit einer Mehrzahl von Vorwärtsgängen und einer Mehrzahl von entsprechenden Rückwärtsgängen aufweist, wobei das Verfahren das Empfangen eines Befehls zum Durchführen eines Wendeschaltvorgangs umfasst, wenn ein Vorwärtsgang eingekuppelt wurde, und in Reaktion auf das Empfangen des Befehls das Auswählen eines höheren oder niedrigeren Rückwärtsgangs als der Rückwärtsgang, der dem eingekuppelten Vorwärtsgang entspricht, basierend auf einer gespeicherten vorbestimmten Information umfasst; oder das Empfangen eines Befehls zum Durchführen eines Wendeschaltvorgangs umfasst, wenn ein Rückwärtsgang eingekuppelt wurde, und in Reaktion auf das Empfangen des Befehls das Auswählen eines höheren oder niedrigeren Vorwärtsgangs als der Vorwärtsgang, der dem eingekuppelten Rückwärtsgang entspricht, basierend auf einer gespeicherten vorbestimmten Information umfasst; **dadurch gekennzeichnet, dass** dann ein sich von der gespeicherten vorbestimmten Information unterscheidender temporärer Wert verwendet wird, wenn das Auswählen des höheren oder niedrigeren Vorwärts- oder Rückwärtsgangs zu einem nicht existierenden Gang oder einem Leerlauf führt,
wobei die gespeicherte vorbestimmte Information festlegt, ob der gewählte Gang größer oder kleiner als der entsprechende Rückwärtsgang oder der entsprechende Vorwärtsgang ist, und der temporäre Wert derart definiert ist, dass ein Gang gewählt wird, der der Gangwahl bei Verwendung der gespeicherten vorbestimmten Information am nächsten ist.

2. Verfahren nach Anspruch 1, wobei die vorbestimmte Information festlegt, ob der gewählte Gang größer oder kleiner als der entsprechende Rückwärtsgang oder der entsprechende Vorwärtsgang ist, und die Anzahl von Gängen festlegt, die der gewählte Gang größer oder kleiner als der entsprechende Rückwärtsgang oder der entsprechende Vorwärtsgang ist.

3. Verfahren nach einem der vorangehenden Ansprüche, wobei der entsprechende Rückwärtsgang ein Übersetzungsverhältnis aufweist, das im Wesentlichen dasselbe wie das des entsprechenden Vorwärtsgangs ist.

4. Verfahren nach Anspruch 1, wobei der temporäre Wert auch für die nächste Wendeschaltung verwendet wird.

5. Verfahren nach Anspruch 1, wobei der temporäre Wert nicht für die nächste Wendeschaltung verwendet wird und stattdessen die gespeicherte vorbestimmte Information verwendet wird.

6. Steuereinrichtung (102), die dazu eingerichtet ist, Wendeschaltungen in einem Fahrzeug (10) durchzuführen, das ein Getriebe (24) mit einer Mehrzahl von Vorwärtsgängen und einer Mehrzahl von entsprechenden Rückwärtsgängen aufweist, wobei die Steuereinrichtung (102) Mittel zum Empfangen eines Befehls zum Durchführen eines Wendeschaltvorgangs umfasst, wenn ein Vorwärtsgang eingekuppelt wurde, und in Reaktion auf das Empfangen des Befehls zum Auswählen eines höheren oder niedrigeren Rückwärtsgangs als der Rückwärtsgang, der dem eingekuppelten Vorwärtsgang entspricht, basierend auf einer gespeicherten vorbestimmten Information; oder zum Empfangen eines Befehls zum Durchführen eines Wendeschaltvorgangs, wenn ein Rückwärtsgang eingekuppelt wurde, und in Reaktion auf das Empfangen des Befehls zum Auswählen eines höheren oder niedrigeren Vorwärtsgangs als der Vorwärtsgang, der dem eingekuppelten Rückwärtsgang entspricht, basierend auf einer gespeicherten vorbestimmten Information; **dadurch gekennzeichnet, dass** dann ein sich von der gespeicherten vorbestimmten Information unterscheidender temporärer Wert verwendet wird, wenn das Auswählen des höheren oder niedrigeren Vorwärts- oder Rückwärtsgangs zu einem nicht existierenden Gang oder einem Leerlauf führt,
wobei die gespeicherte vorbestimmte Information festlegt, ob der gewählte Gang größer oder kleiner als der entsprechende Rückwärtsgang oder der entsprechende Vorwärtsgang ist, und der temporäre Wert derart definiert ist, dass ein Gang gewählt wird, der der Gangwahl bei Verwendung der gespeicherten vorbestimmten Information am nächsten ist.

7. Steuereinrichtung nach Anspruch 6, wobei die vorbestimmte Information festlegt, ob der gewählte Gang größer oder kleiner als der entsprechende Rückwärtsgang oder der entsprechende Vorwärtsgang ist, und die Anzahl von Gängen festlegt, die der gewählte Gang größer oder kleiner als der entsprechende Rückwärtsgang oder der entsprechende Vorwärtsgang ist.

8. Steuereinrichtung nach einem der Ansprüche 6 bis 7, wobei der entsprechende Rückwärtsgang ein Übersetzungsverhältnis aufweist, das im Wesentlichen dasselbe wie das des entsprechenden Vorwärtsgangs ist.

9. Steuereinrichtung nach einem der Ansprüche 6 bis 7, wobei der entsprechende Rückwärtsgang ein Übersetzungsverhältnis aufweist, das gegenüber den anderen Rückwärtsgängen dem des entsprechenden Vorwärtsgangs am nächsten ist.

## Revendications

1. Méthode d'inversion de marche d'un véhicule (10) pourvu d'une transmission (24) avec plusieurs rapports de marche avant et plusieurs rapports de marche arrière correspondants, la méthode comprenant la réception d'une commande d'inversion de marche lorsqu'un rapport de marche avant est engagé, et en réponse, la réception de la commande sélectionnant un rapport de marche arrière supérieur ou inférieur au rapport de marche arrière correspondant au rapport de marche avant basé sur des informations prédéterminées stockées ; ou la réception d'une commande d'inversion de marche lorsqu'un rapport de marche arrière est engagé, et en réponse, la réception de la commande sélectionnant un rapport de marche avant supérieur ou inférieur au rapport de marche avant correspondant au rapport de marche arrière basé sur des informations prédéterminées stockées ; **caractérisée en ce que** la sélection dudit rapport de marche avant ou arrière supérieur ou inférieur entraine un rapport inexistant ou neutre, une valeur temporaire différente des informations prédéterminées stockées est utilisée,
dans laquelle lesdites informations prédéterminées stockées déterminent si le rapport sélectionné est supérieur ou inférieur au rapport de marche arrière correspondant ou au rapport de marche avant correspondant et ladite valeur temporaire est définie afin de sélectionner le rapport le plus proche de la sélection des rapports lorsque lesdites informations prédéterminées stockées sont utilisées.

2. Méthode selon la revendication 1, dans laquelle les informations prédéterminées déterminent si le rapport sélectionné est supérieur ou inférieur au rapport de marche arrière correspondant ou au rapport de marche avant correspondant et le nombre de rapports au rapport sélectionné est supérieur ou inférieur au rapport de marche arrière correspondant ou au rapport de marche avant correspondant.

3. Méthode selon l'une quelconque des revendications précédentes, dans laquelle le rapport de marche arrière correspondant a un rapport de transmission qui est sensiblement le même que le rapport de marche avant.

4. Méthode selon la revendication 1, dans laquelle la valeur temporaire est également utilisée pour la prochaine inversion de marche.

5. Méthode selon la revendication 1, dans laquelle les informations prédéterminées stockées sont utilisées pour la prochaine inversion de marche au lieu de la valeur temporaire.

6. Dispositif de commande (102) agencé pour exécuter une inversion de marche d'un véhicule (10) pourvu d'une transmission (24) avec plusieurs rapports de marche avant et plusieurs rapports de marche arrière correspondants, le dispositif de commande (102) comprenant des moyens pour recevoir une commande d'inversion de marche lorsqu'un rapport de marche avant est engagé, et en réponse, la réception de la commande sélectionnant un rapport de marche arrière supérieur ou inférieur au rapport de marche arrière correspondant au rapport de marche avant basé sur les informations prédéterminées stockées ; ou pour recevoir une commande d'inversion de marche lorsqu'un rapport de marche arrière est engagé, et en réponse, la réception de la commande sélectionnant un rapport de marche avant supérieur ou inférieur au rapport de marche avant correspondant au rapport de marche arrière basé sur les informations prédéterminées stockées ; **caractérisé en ce que** la sélection dudit rapport de marche avant ou arrière supérieur ou inférieur résulte en un rapport inexistant ou neutre, une valeur temporaire différente des informations prédéterminées stockées est utilisée,
dans laquelle lesdites informations prédéterminées stockées déterminent si le rapport sélectionné est supérieur ou inférieur au rapport de marche arrière correspondant ou au rapport de marche avant correspondant, et ladite valeur temporaire est définie pour sélectionner un rapport le plus proche de la sélection de rapports lorsque lesdites informations prédéterminées stockées sont utilisées.

7. Dispositif de commande selon la revendication 6, dans lequel les informations prédéterminées déterminent si le rapport sélectionné est supérieur ou inférieur au rapport de marche arrière correspondant ou au rapport de marche avant correspondant et le nombre de rapports au rapport sélectionné est supérieur ou inférieur au rapport de marche arrière correspondant ou au rapport de marche avant correspondant.

8. Dispositif de commande selon l'une quelconque des revendications 6 à 7, dans lequel le rapport de marche arrière correspondant a un rapport de transmission qui est sensiblement le même que le rapport de marche avant correspondant.

9. Dispositif de commande selon l'une quelconque des revendications 6 à 7, dans lequel le rapport de marche arrière correspondant a un rapport de transmission qui est plus proche du rapport de marche avant correspondant que les autres rapports de marche arrière.
